# FASCICULE DE BREVET EUROPEEN

(11) **EP 2 125 235 B1**
(45) Date de publication et mention de la délivrance du brevet: **27.11.2013**
(21) Numéro de dépôt: 08719308.2
(22) Date de dépôt: 26.02.2008
(51) Int. Cl.: C04B 28/02, C04B 40/00, C09C 1/02

(54) **UTILISATION DANS UNE COMPOSITION DE LIANT HYDRAULIQUE, D'UN CARBONATE DE CALCIUM BROYE A SEC AVEC UN COPOLYMERE DE L'ACIDE (METH)ACRYLIQUE ET UNE FONCTION ALCOXY OU HYDROXY POLYALKYLENEGLYCOL**
VERWENDUNG VON TROCKENGEMAHLENEM CALCIUMCARBONAT MIT EINEM (METH)ACRYLSÄURECOPOLYMER UND EINER ALKOXY- ODER HYDROXY-POLYALKYLEN-GLYCOL-FUNKTION IN EINER HYDRAULISCHEN BINDEMITTELZUSAMMENSETZUNG
USE IN HYDRAULIC BINDER COMPOSITION OF DRY-GROUND CALCIUM CARBONATE WITH (METH)ACRYLIC ACID COPOLYMER AND ALKOXY OR HYDROXY POLYALKYLENE GLYCOL FUNCTION

(30) Priorité: 05.03.2007 FR 0701593
(43) Date de publication de la demande: 02.12.2009
(73) Titulaire: COATEX S.A.S., 69730 Genay (FR)
(72) Inventeur: SUAU, Jean-Marc, F-69480 Lucenay (FR); MONGOIN, Jacques, F-69650 Quincieux (FR); KENSICHER, Yves, F-69620 Theize (FR); GUERRET, Olivier, F-69890 La Tour De Salvagny (FR)
(86) Numéro de dépôt international: PCT/IB2008/000610
(87) Numéro de publication internationale: WO 2008/107790

(56) Documents cités:
- EP-A- 1 201 624
- WO-A-2005/123621
- DATABASE WPI Week 199910 Thomson Scientific, London, GB; AN 1999-114722 XP002464460 & JP 10 338518 A (KURIMOTO IRON WORKS LTD) 22 décembre 1998 (1998-12-22)

## Description

La présente invention concerne le domaine des compositions à base de liants hydrauliques, contenant au moins une matière minérale qui est un carbonate de calcium obtenu par broyage à sec.

Le broyage en voie sèche (par opposition au milieu aqueux) du carbonate de calcium est décrit dans les documents "Beitrag zur Aufklärung der Wirkungsweise von Mahlhilfsmitteln" ("Freiberger Forschungshefte" VEB Deutscher Verlag für Grundstoffindustrie, Leipzig, Germany (1975)), et "Calcium Carbonate" (Birkhäuser Verlag, 2001).

Ce broyage, qui correspond à une diminution de la taille des particules individuelles de carbonate de calcium par action mécanique, est assisté par des agents de broyage qui peuvent être classés en 3 catégories suivantes.

La première comprend les acides faibles (formique, acétique, lactique, adipique comme cité dans le document FR 2 863 914, ou stéarique comme indiqué dans le document EP 0 510 890), et leurs sels (lignine sulfonate de sodium, acétate de sodium,...). La deuxième comprend les bases faibles, et notamment les amines (voir le document GB 2 179 268). La troisième, et la plus usitée car la plus efficace, comprend les alcools à base de glycols, dont notamment le diéthylène glycol illustré dans les documents WO 2002/081 573 et US 2003/019 399.

Or, même s'ils demeurent les plus efficaces, ces derniers conduisent à des carbonates de calcium présentant une quantité de composés organiques volatiles (COV) élevée. Aussi, trouver une solution alternative à ces agents d'aide au broyage à base de glycols, tout en demeurant au moins aussi efficaces qu'eux au niveau de l'application finale, constituerait une forte contribution à l'état de la technique.

A cet égard, un premier objet de l'invention consiste en l'utilisation, dans une composition à base d'un liant hydraulique, d'un carbonate de calcium caractérisé en ce que ledit carbonate est broyé à sec en présence d'un agent d'aide au broyage d'une part, et en ce que l'agent d'aide au broyage d'autre part est un copolymère constitué :
a) d'au moins un monomère anionique choisi parmi l'acide acrylique, l'acide méthacrylique et leurs mélanges,
b) et d'au moins un monomère non ionique, de formule (I) : 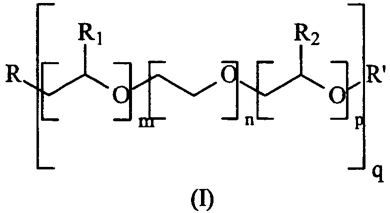 dans laquelle :
   - m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 4 atomes de carbone, R' étant très préférentiellement le radical méthyle,
   ou du mélange de plusieurs monomères de formule (I),
c) et éventuellement d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

On pourra désigner cet agent d'aide au broyage à travers l'expression de copolymère de l'acide (méth)acrylique avec un monomère portant une fonction alcoxy ou hydroxy polyalkylèneglycol.

Les exemples de la présente Demande démontrent que, en comparaison avec un carbonate de calcium broyé à sec avec un diéthylène glycol, un carbonate de calcium selon l'invention permet d'obtenir une composition à base de liant hydraulique tel qu'un mortier présentant un degré d'étalement bien plus important.

Cette utilisation est aussi caractérisée en ce que ledit copolymère est constitué, exprimé en pourcentage en poids des monomères (la somme des pourcentages en poids de tous les monomères étant égale à 100 %) :
a) de 0,5 % à 50 %, préférentiellement de 1 % à 25 %, très préférentiellement de 5 % à 20 %, d'au moins un monomère anionique choisi parmi l'acide acrylique, l'acide méthacrylique et leurs mélanges,
b) de 50 % à 99,5 %, préférentiellement de 75 % à 99 %, très préférentiellement de 80 % à 95 %, d'au moins un monomère non ionique, de formule (I) : 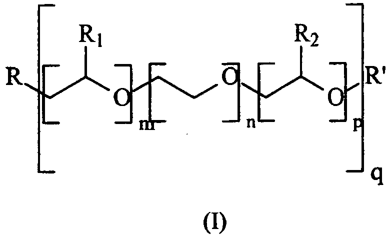 dans laquelle :
   - m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 4 atomes de carbone, R' étant très préférentiellement le radical méthyle,
   ou du mélange de plusieurs monomères de formule (I),
c) et de 0 % à 50 % d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

Cette utilisation est aussi caractérisée en ce que ledit copolymère est obtenu sous forme acide et éventuellement distillé, et est éventuellement partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est choisi parmi la triéthanolamine et l'hydroxyde de sodium.

Cette utilisation est aussi caractérisée en ce que ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

Cette utilisation est aussi caractérisée en ce que ledit copolymère peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

L'une des phases correspond alors au polymère utilisé selon l'invention.

Cette utilisation est aussi caractérisée en ce qu'on met en oeuvre de 0,05 % à 5 %, préférentiellement de 0,1 % à 3 %, très préférentiellement de 0,1 % à 1 % en poids sec dudit copolymère, par rapport au poids sec de carbonate de calcium pendant le broyage à sec dudit carbonate.

Cette utilisation est aussi caractérisée en ce que la composition à base d'un liant hydraulique est un ciment, un béton ou un mortier.

Un deuxième objet de l'invention est constitué des compositions à base d'un liant hydraulique obtenues par utilisation du carbonate de calcium broyé à sec selon l'invention.

### EXEMPLES

Dans ces exemples, tous les broyages sont réalisés selon une méthode bien connue de l'homme du métier (le document FR 2 901 491 décrivant une telle méthode). On se contente ici d'indiquer la granulométrie finale des particules de carbonate de calcium obtenues après broyage (l'homme du métier sachant en réalité comment adapter les paramètres du procédé en vue d'aboutir à une telle granulométrie ; on pourra toutefois se reporter aussi au document précité).

Dans chacun des essais n° 1 à 4, on réalise un mortier par mélange sous agitation, selon les connaissances de base de l'homme du métier, un sable normalisé (EN 196-1), du ciment (CEM I 42.5 PM ES), de l'eau du robinet et un carbonate de calcium broyé selon l'art antérieur ou selon l'invention (les proportions sont données dans le tableau 1).

Cette préparation est utilisée pour remplir un mini-cône d'Abrams (poids minimum : 4 kg, diamètre supérieur : 50 mm, diamètre inférieur : 100 mm, hauteur : 150 mm). Le cône est posé sur une plaque en PVC humidifiée à l'aide d'une éponge.
Le remplissage dure 2 minutes, le contenu du cône étant tassé en « piquant » 25 fois régulièrement la préparation à l'intérieur du cône à l'aide d'une tige métallique.
Le cône est ensuite soulevé dès la fin du remplissage ; son contenu s'étale sur la plaque en PVC. Après 30 secondes, l'étalement est déterminé en mesurant la longueur en mm de deux diamètres perpendiculaires de la galette ronde obtenue et en faisant la moyenne des 2.

### Essai n° 1

Cet essai illustre l'art antérieur et met en oeuvre un carbonate de calcium obtenu par broyage à sec en présence de 3000 ppm (par rapport au poids sec de carbonate de calcium) d'un agent de broyage de l'art antérieur qui est le diéthylène glycol.
On obtient, après broyage, un carbonate de calcium dont 73,8 % et 48,5 % en poids des particules ont un diamètre moyen inférieur respectivement à 2 µm et 1 µm (tel que mesuré à partir d'un Sedigraph™ 5100).

### Essai n° 2

Cet essai illustre l'art antérieur et met en oeuvre un carbonate de calcium obtenu par broyage à sec en présence de 3000 ppm (par rapport au poids sec de carbonate de calcium) d'un agent de broyage de l'invention qui est un polymère composé, en pourcentage en poids, de 81,5 % de méthacrylate de méthoxy polyéthylène glycol de poids moléculaire 2000, de 4,9 % d'acide méthacrylique, et de 13,6 % d'acide acrylique. On obtient, après broyage, un carbonate de calcium dont 74,5 % et 44,1 % en poids des particules ont un diamètre moyen inférieur respectivement à 2 µm et 1 µm (tel que mesuré à partir d'un Sedigraph™ 5100).

### Essai n° 3

Cet essai illustre l'art antérieur et met en oeuvre un carbonate de calcium obtenu par broyage à sec en présence de 1400 ppm (par rapport au poids sec de carbonate de calcium) d'un agent de broyage de l'art antérieur qui est le diéthylène glycol.
On obtient, après broyage, un carbonate de calcium dont 47,1 % et 30,0 % en poids des particules ont un diamètre moyen inférieur respectivement à 2 µm et 1 µm (tel que mesuré à partir d'un Sedigraph™ 5100).

### Essai n° 4

Cet essai illustre l'art antérieur et met en oeuvre un carbonate de calcium obtenu par broyage à sec en présence de 1400 ppm (par rapport au poids sec de carbonate de calcium) d'un agent de broyage de l'invention qui est un polymère composé, en pourcentage en poids, de 81,5 % de méthacrylate de méthoxy polyéthylène glycol de poids moléculaire 2000, de 4,9 % d'acide méthacrylique, et de 13,6 % d'acide acrylique. On obtient, après broyage, un carbonate de calcium dont 45,4 % et 28,0 % en poids des particules ont un diamètre moyen inférieur respectivement à 2 µm et 1 µm (tel que mesuré à partir d'un Sedigraph™ 5100).

Le polymère mis en oeuvre dans les essais n° 2 et 4 est obtenu par des techniques de polymérisation bien connues de l'homme du métier.

Dans un 1^{er} bécher sont introduits à température ambiante et sous agitation : 259,02 g de méthacrylate de méthoxy polyéthylène glycol de poids moléculaire égal à 2000 g/mol, une solution contenant 15,36 g d'acide méthacrylique et 274,39 g d'eau, une solution contenant 69,86 g d'eau brute et 50,25 g d'acide acrylique.
Dans un 2^{ème} bécher sont introduits à température ambiante et sous agitation : 2,38 g d'acide thiolactique (98.5 % de pureté massique) et 52,14 g d'eau.
Dans un 3^{ème} un bécher sont introduits à température ambiante et sous agitation : 2,84 g de persulfate d'ammonium (NH₄)₂S₂O₈ et 51,90 g d'eau.
Dans un 4^{ème} bécher sont introduits à température ambiante et sous agitation : 0,56 g de persulfate d'ammonium (NH₄)₂S₂O₈ et 10,87 g d'eau.

Dans un réacteur cylindrique simple enveloppe, surmonté d'une colonne réfrigérante, d'un système d'agitation à ancre et de 3 entrées, sont introduits 351,39 g d'eau, et de 295,61 g d'isopropanol. Le milieu réactionnel est chauffé sous agitation (230 tours/min) à 84 ± 2°C. Le contenu des 3 premiers béchers est introduit dans le milieu réactionnel en 2 heures. Les canules d'introduction sont ensuite rincées avec 20,84 g d'eau (cette eau va directement dans le milieu réactionnel). On ajoute ensuite au milieu réactionnel, la solution du 4^{ème} bécher et on cuit 1 heure à 84 ± 2°C (à 230 tours/min). En fin de réaction, on rince avec 52,13 g d'eau. On augmente ensuite la température et on distille 604,78 g. On fait redescendre la température entre 50 et 60°C et on ajoute au milieu réactionnel 69,34 g d'hydroxyde de sodium à 50 % massique dans l'eau. Le milieu est enfin dilué avec 20,85 g d'eau. On refroidit avant d'obtenir le polymère de l'invention.

Les compositions de chaque mortier et les valeurs d'étalement sont reportées dans le tableau 1.

**Tableau 1**

| Essai n° | 1 | 2 | 3 | 4 |
|---|---|---|---|---|
| Art Antérieur / Invention | AA | IN | AA | IN |
| Sable | 1767 | 1767 | 1767 | 1767 |
| Ciment | 500 | 500 | 500 | 500 |
| Eau | 234,85 | 234,85 | 234,85 | 234,85 |
| CaCO3 broyé à sec | 150,15 | 150,15 | 150,15 | 150,15 |
| Etalement (mm) | 130 | 150 | 125 | 155 |

En comparant les essais 2 par 2 (1 à 2, et 3 à 4), on constate que l'étalement des mortiers dans le cadre de l'invention est bien plus important que pour les mortiers formulés avec les carbonates de calcium de l'art antérieur.

## Revendications

1. Utilisation, dans une composition à base d'un liant hydraulique, d'un carbonate de calcium **caractérisé en ce que** ledit carbonate est broyé à sec en présence d'un agent d'aide au broyage d'une part, et **en ce que** l'agent d'aide au broyage d'autre part est un copolymère constitué :
a) d'au moins un monomère anionique choisi parmi l'acide acrylique, l'acide méthacrylique et leurs mélanges,
b) et d'au moins un monomère non ionique, de formule (I) : 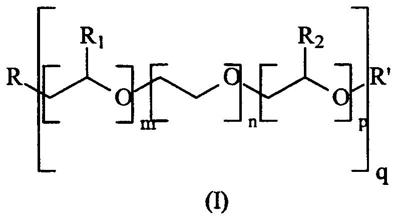 dans laquelle :
- m, n, p et q sont des entiers tels que : m, n, p ≤ 150, q ≥1, et 5 ≤ (m+n+p)q ≤ 150, et préférentiellement 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 4 atomes de carbone, R' étant très préférentiellement le radical méthyle,
ou du mélange de plusieurs monomères de formule (I),
c) et éventuellement d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

2. Utilisation selon la revendication 1, **caractérisée en ce que** ledit copolymère est constitué, exprimé en pourcentage en poids des monomères (la somme des pourcentages en poids de tous les monomères étant égale à 100 %) :
a) de 0,5 % à 50 %, préférentiellement de 1 % à 25 %, très préférentiellement de 5 % à 20 %, d'au moins un monomère anionique choisi parmi l'acide acrylique, l'acide méthacrylique et leurs mélanges,
b) de 50 % à 99,5 %, préférentiellement de 75 % à 99 %, très préférentiellement de 80 % à 95 %, d'au moins un monomère non ionique, de formule (I) : 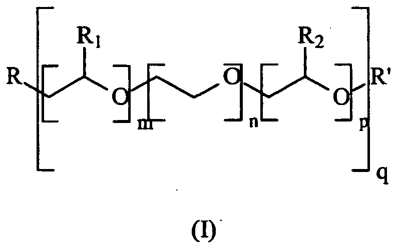 dans laquelle :
- m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 4 atomes de carbone, R' étant très préférentiellement le radical méthyle,
ou du mélange de plusieurs monomères de formule (I),
c) et de 0 % à 50 % d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

3. Utilisation, selon l'une des revendications 1 ou 2, **caractérisée en ce que** ledit copolymère est obtenu sous forme acide et éventuellement distillé, et est éventuellement partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle **en ce que** l'agent de neutralisation est choisi parmi la triéthanolamine et l'hydroxyde de sodium.

4. Utilisation, selon l'une des revendications 1 à 3, **caractérisée en ce que** ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

5. Utilisation, selon l'une des revendications 1 ou 4, **caractérisée en ce que** ledit copolymère peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

6. Utilisation, selon l'une des revendications 1 à 5, **caractérisée en ce qu'**on met en oeuvre de 0,05 % à 5 %, préférentiellement de 0,1 % à 3 %, très préférentiellement de 0,1 % à 1 % en poids sec dudit copolymère, par rapport au poids sec de carbonate de calcium pendant le broyage à sec dudit carbonate.

7. Utilisation selon l'une des revendications 1 à 6, **caractérisée en ce que** la composition à base d'un liant hydraulique est un ciment, un béton ou un mortier.

8. Composition à base d'un liant hydraulique **caractérisée en ce qu'**elle est obtenue par utilisation du carbonate de calcium broyé à sec selon l'une des revendications 1 à 7.

## Patentansprüche

1. Verwendung von Calciumcarbonat in einem Gemisch, das auf einem hydraulischen Binder basiert, **dadurch gekennzeichnet, dass** das Carbonat in Anwesenheit eines Mahlhilfsmittels trockenvermahlen wird und dadurch, dass das Mahlhilfsmittel ein Copolymer ist, der :
a) mindestens aus einem anionischen Monomer ausgewählt aus Acrylsäure, Methacrylsäure und ihren Gemischen,
b) und aus mindestens einem nichtionischen Monomer der Formel (I): 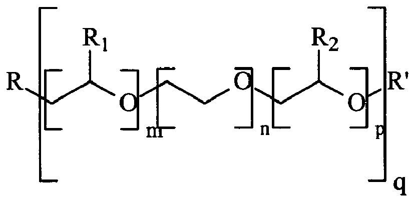 besteht,
worin:
- m, n, p und q ganzzahlig sind, mit: m, n, p ≤ 150, q ≥ 1, und 5 ≤ (m+n+p)q < 150, und vorzugsweise 15 ≤ (m+n+p)q ≤ 120,
- R₁ für Wasserstoff oder einen Mehyl- oder Ethylrest steht,
- R₂ für Wasserstoff oder einen Mehyl- oder Ethylrest steht,
- R für einen Rest steht, der eine ungesättigte polymerisierbare Gruppe enthält, die vorzugsweise zur Gruppe der Vinyle oder zur Gruppe der Akryl-, Methakryl, Maleinester, oder zur Gruppe der ungesättigten Urethane wie Acrylurethan, Methacrylurethan, α-α' Dimethyl-Isopropenyl-Benzylurethan, Allylurethan, oder zur Gruppe der substituierten oder unsubstituierten Allyl- oder Vinylether, oder zur Gruppe der ethylenisch ungesättigten Amide oder Imide gehört,
- R' für Wasserstoff oder einen Kohlenwasserstoffrest mit 1 bis 40 Kohlenstoffatomen steht, vorzugsweise mit 1 bis 4 Kohlenstoffatomen, R' ist speziell bevorzugt ein Methylrest oder ein Gemisch mehrerer Monomere der Formel (I),
c) und optional mindestens ein weiterer Monomer ausgewählt aus (Meth)Acrylsäureanhydrid, (Meth)Acrylamid, oder aus (Meth)Acrylsäureestern wie vorzugsweise Acrylaten und Methacrylaten, bevorzugt mit 1 bis 20 Kohlenstoffatomen in ihrer Estergruppe, wie vorzugsweise aus Methylacrylat, Ethylacrylat, Isopropylacrylat, n-Propylacrylat, Isobutylacrylat, n-Butylacrylat, ter-Butylacrylat, 2-Ethylhexylacrylat, Methylmethacrylat, Ethylmethacrylat, hydroxylierte Methacrylate wie Hydroxylethylmethacrylat, Hydroxylpropylmethacrylat, oder ausgewählt aus aromatischen vinylischen Monomeren wie vorzugsweise Styrol, α-Methylsterol, Styrolsulfonat oder Acrylamid-2-Methyl-2-Propansulfonsäure, oder aus Organophosphat-Monomeren, wie vorzugsweise Acrylatphosphat und Ethylenglycolmethacrylatphosphat, oder aus Oxyethylenacrylatphosphat und Oxyethylenmethacrylatphosphat, und/oder aus Oxypropylenglykolphosphatacrylat, und aus deren Gemischen.

2. Verwendung nach Anspruch 1, **dadurch gekennzeichnet, dass** der genannte Copolymer, in Ges.-% der Monomere (die Summe der Ges.-% aller Monomere ist gleich 100 Ges.-%):
a) zu 0,5 Ges.-% bis 50 Ges.-%, vorzugsweise zu 1 Ges.-% bis 25 Gew.-%, speziell bevorzugt zu 5 Ges.-% bis 20 Gew.-%, aus mindestens einem anionischen Monomer ausgewählt aus Acrylsäure, Methacrylsäure und ihren Gemischen,
b) zu 50 Ges.-% bis 99.5 Ges.-%, vorzugsweise zu 75 Ges.-% bis 99 Ges.-%, speziell bevorzugt zu 80 Ges.-% bis 95 Ges.-%, aus mindestens einem nichtionischen Monomer der Formel (I): 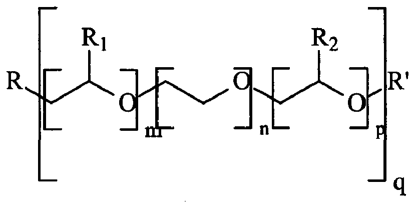 besteht,
worin:
- m, n, p und q ganzzahlig sind und gilt, dass: m, n, p ≤ 150, q ≥ 1, und 5 ≤ (m+n+p)q ≤ 150, und vorzugsweise gilt 15 ≤ (m+n+p)q ≤ 120,
- R₁ für Wasserstoff oder Methyl oder Ethyl steht,
- R₂ für Wasserstoff oder für einen Methylrest oder einen Ethylrest steht,
- R für einen Rest steht, der eine ungesättigte polymerisierbare Gruppe enthält, die vorzugsweise zur Gruppe der Vinyle sowie zur Gruppe der Acrylester, der Methacrylester, Maleinsäureester, sowie zur Gruppe der ungesättigten Urethane wie Acrylurethan, Methacrylurethan, α-α 'Dimethyl-Isopropenyl-Benzylurethan und Allylurethane, ebenso wie zur Gruppe der substituierten oder unsubstituierten Allylether oder Vinylether, oder desweiteren zur Gruppe der ethylenisch ungesättigten Amide oder Imide, oder desweiteren zur Gruppe gebildet aus Acrylamid und Methacrylamid gehört,
- R' für Wasserstoff oder einen Wasserstoffrest steht, oder für einen KohlenwasserstoffRest mit 1 bis 40 Kohlenstoffatomen, vorzugsweise 1 bis 4 Kohlenstoffatomen, R' ist speziell bevorzugt ein Methylrest,
oder für die Gemische mehrerer Monomere der Formel (I),
c) und zu 0 % bis 50 % aus zumindest einem anderen Monomer, ausgewählt aus (Meth)Acrylsäureanhydrid, (Meth)Acrylamidanhydrid, oder aus den (Meth)Acrylsäureestern, wie vorzugsweise Acrylaten und Methacrylaten mit 1 bis 20 Kohlenstoffatomen in ihrem Esterrest, wie speziell bevorzugt Methylacrylat, Ethylacrylat, Isopropylacrylat, n-Propylacrylat, Isobutylacrylat, n-Butylacrylat, ter-Butylacrylat, 2-Ethylhexylacrylat, Methylmethacrylat, Ethylmethacrylat, hydroxylhaltige Methacrylate wie Hydroxyethyl- und Hydroxypropyl-Methacrylat, oder aus vinylhaltigen aromatischen Monomeren wie vorzugsweise Styrol, α-Methylstyrol, Styrolsulfonat oder Acrylamido-2-Methyl-2-Propansulfonische Säure, oder aus organophosphorierten Monomeren, wie vorzugsweise Acrylatphosphat und Ethylenglykolmethacrylatphosphat, oder Oxyethylen-Phosphatacrylat und Oxyethylen-Phosphatmethacrylat und/oder Oxypropylenglykol-Phosphatacrylat und Oxypropylenglykol-Phosphatmethacrylat, und aus ihren Gemischen.

3. Verwendung, nach Anspruch 1 oder 2, **dadurch gekennzeichnet, dass** der genannte Copolymer in saurer Form und möglicherweise destilliert erhalten wird, und dass er optional unvollständig oder vollständig durch ein oder mehrere Neutralisationsmittel mit einem einwertigen oder mehrwertigen Kation neutralisiert wird, das oder die genannten Neutralisationsmittel sind vorzugsweise ausgewählt aus Ammonium oder aus Hydroxiden oder Oxiden von Kalzium oder Magnesium oder aus den Hydroxiden von Natrium, Kalium, Lithium, oder aus den primären, sekundären oder tertiären aliphatischen und/ oder zyklischen Aminen wie vorzugsweise Stearylamin, den Ethanolaminen (Mono-, Di-, Tri-Ethanolamin), Mono und Diethylamin, Cyclahexylamin, Methylcyclohexylamin, Aminomethylpropanol, Morpholin, und speziell bevorzugt darin, dass das Neutralisationsmittel aus Triethanolamin und Natriumhydroxid ausgewählt ist.

4. Verwendung nach einem der Ansprüche 1 bis 3, **dadurch gekennzeichnet, dass** der genannte Copolymer durch radikalische Polymerisation in Lösung erhalten wird, in direkter oder inverser Emulsion, in Suspension oder ausgefällt in Lösungsmitteln, in Gegenwart von Katalysatorensystem und Kettenüberträgern, oder desweiteren durch kontrollierte radikalische Polymerisation und vorzugsweise durch Polymerisation kontolliert durch Nitroxide (NMP) oder Cobaloxim, durch Radical Atom Transfer Polymerisation (ATRP), durch radikalische Polymerisation kontrolliert durch Schwefelderivate, ausgewählt aus den Carbamaten, Dithioestern oder den Trithiocarbonaten (RAFT) oder den Xanthaten.

5. Verwendung nach einem der Ansprüche 1 oder 4, **dadurch gekennzeichnet, dass** der genannte Copolymer vor oder nach der unvollständigen oder vollständigen Neutralisation, behandelt und durch statische oder dynamische Methoden, die dem Fachmann bekannt sind, in mehrere Phasen aufgetrennt werden kann, dies durch ein oder mehrere polare Lösungsmittel, die vorzugsweise zur Gruppe von Wasser, Methanol, Ethanol, Propanol, Isopropanol, Butanol, Azeton, Tetrahydrofuran oder deren Gemischen gehören.

6. Verwendung nach einem der Ansprüche 1 bis 5, **dadurch gekennzeichnet, dass** das Trockengewicht des genannten Copolymers im Verhältnis zum Trockengewicht des genannten Carbonats während der Trockenvermahlung 0,05 % bis 5 %, vorzugsweise 0,1 % bis 3 %, speziell bevorzugt 0,1 % bis 1 % beträgt.

7. Verwendung nach einem der Ansprüche 1 bis 6, **dadurch gekennzeichnet, dass** das Gemisch basierend auf einem hydraulischen Binder ein Zement, ein Beton oder ein Mörtel ist.

8. Gemisch basierend auf einem hydraulischen Binder, **dadurch gekennzeichnet, dass** es unter Verwendung trockenvermahlenen Calciumcarbonats nach einem der Ansprüche 1 bis 7 erhalten wird.

## Claims

1. Use, in a composition with a hydraulic binder base, of a calcium carbonate **characterised in that** the said carbonate is dry-ground in the presence of a grinding aid agent, firstly, and **in that** the grinding aid agent is, secondly, a copolymer, consisting:
a) of at least one anionic monomer chosen from among acrylic acid, methacrylic acid and their blends,
b) and of at least one non-ionic monomer, of formula (I): 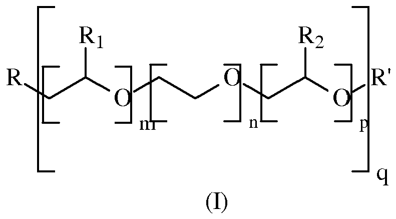 where:
- m, n, p and q are integers such that: m, n, p ≤ 150, q ≥ 1, and 5 ≤ (m+n+p)q ≥ 150, and preferentially 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides, or again to the group constituted by acrylamide and methacrylamide,
- R' represents hydrogen or a hydrocarbonated radical with 1 to 40 carbon atoms, preferentially 1 to 4 carbon atoms, where R' is very preferentially the methyl radical,
or a blend of several monomers of formula (I),
c) and possibly of at least one other monomer chosen from among (meth)acrylic anhydride, (meth)acrylamide, or from among the (meth)acrylic esters, such as preferentially the acrylates and methacrylates with 1 to 20 carbon atoms in their ester radical, such as very preferentially the methyl, ethyl, isopropyl, n-propyl, isobutyl, n-butyl, ter-butyl or 2-ethylhexyl acrylates, the methyl or ethyl methacrylates, the hydroxylated methacrylates such as the hydroxyethyl and hydroxypropyl methacrylates, or from among the aromatic vinylic monomers such as preferentially styrene, α-methylstyrene, styrene sulfonate, or acrylamido-2-methyl-2-propane-sulfonic acid, or from among the organophosphate monomers, such as preferentially the acrylate and methacrylate phosphates of ethylene glycol, or the acrylate and methacrylate phosphates of oxyethylene and/or oxypropylene glycol, and their blends.

2. Use according to claim 1, **characterised in that** the said copolymer consists, expressed as a percentage by weight of the monomers (the sum of the percentages by weight of all the monomers equals 100%):
a) 0.5% to 50%, preferentially 1% to 25%, and very preferentially 5% to 20%, of at least one anionic monomer chosen from among acrylic acid, methacrylic acid and their blends,
b) 50% to 99.5%, preferentially 75% to 99%, and very preferentially 80% to 95%, of at least one non-ionic monomer, of formula (I): 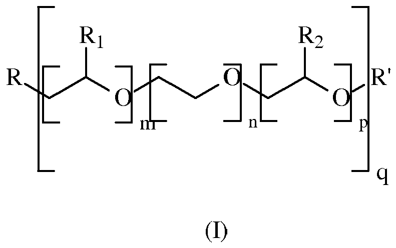 where:
- m, n, p and q are integers such that: m, n, p ≤ 150, q ≥ 1, and 5 ≤ (m+n+p)q ≤ 150, and preferentially 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides, or again to the group constituted by acrylamide and methacrylamide,
- R' represents hydrogen or a hydrocarbonated radical with 1 to 40 carbon atoms, preferentially 1 to 4 carbon atoms, where R' is very preferentially the methyl radical,
or a blend of several monomers of formula (I),
c) 0% to 50% of at least one other monomer chosen from among (meth)acrylic anhydride, (meth)acrylamide, or from among the (meth)acrylic esters, such as preferentially the acrylates and methacrylates with 1 to 20 carbon atoms in their ester radical, such as very preferentially the methyl, ethyl, isopropyl, n-propyl, isobutyl, n-butyl, ter-butyl or 2-ethylhexyl acrylates, the methyl or ethyl methacrylates, the hydroxylated methacrylates such as the hydroxyethyl and hydroxypropyl methacrylates, or from among the aromatic vinylic monomers such as preferentially styrene, α-methylstyrene, styrene sulfonate, or acrylamido-2-methyl-2-propane-sulfonic acid, or from among the organophosphate monomers, such as preferentially the acrylate and methacrylate phosphates of ethylene glycol, or the acrylate and methacrylate phosphates of oxyethylene and/or oxypropylene glycol, and their blends.

3. Use, according to one of the claims 1 or 2, **characterised in that** the said copolymer is obtained in the acidic form and possibly distilled, and is possibly partially or totally neutralised by one or more neutralisation agents having a monovalent or polyvalent cation, where the said agents are chosen preferentially from among ammonia or from among calcium, magnesium hydroxides and/or oxides, or from among sodium, potassium or lithium hydroxides, or from among the aliphatic and/or cyclic primary, secondary or tertiary amines, such as preferentially stearylamine, the ethanolamines (mono-, di- and triethanolamine), mono- and diethylamine, cyclohexylamine, methylcyclohexylamine, amino methyl propanol, morpholine, and preferentially **in that** the neutralisation agent is chosen from among triethanolamine and sodium hydroxide.

4. Use, according to one of the claims 1 to 3, **characterised in that** the said copolymer is obtained by processes of radical polymerisation in solution, in a direct or reverse emulsion, in suspension or precipitation in solvents, in the presence of catalytic systems and transfer agents, or again by processes of controlled radical polymerisation, and preferentially by nitroxide mediated polymerisation (NMP) or by cobaloximes, by atom transfer radical polymerisation (ATRP), by controlled radical polymerisation by sulphurated derivatives, chosen from among carbamates, dithioesters or trithiocarbonates (RAFT) or xanthates.

5. Use, according to one of the claims 1 or 4, **characterised in that** the said copolymer may be, before or after the total or partial neutralisation reaction, treated and separated into several phases, according to static or dynamic processes known to the skilled man in the art, by one or more polar solvents belonging preferentially to the group constituted by water, methanol, ethanol, propanol, isopropanol, the butanols, acetone, tetrahydrofuran or their blends.

6. Use, according to one of the claims 1 to 5, **characterised in that** 0.05% to 5%, preferentially 0.1 % to 3%, and very preferentially 0.1 % to 1%, by dry weight of the said copolymer relative to the dry weight of calcium carbonate is used during the dry grinding of the said carbonate.

7. Use according to one of the claims 1 to 6, **characterised in that** the composition with a hydraulic binder is a cement, a concrete or a mortar.

8. A composition with a hydraulic binder base, **characterised in that** it is obtained by use of the dry-ground calcium carbonate according to one of the claims 1 to 7.
